# EUROPEAN PATENT APPLICATION

(11) **EP 2 428 815 A1**
(43) Date of publication of application: **14.03.2012**
(21) Application number: 11180575.0
(22) Date of filing: 08.09.2011
(51) Int. Cl.: G01S 7/52, G01S 15/89, G06T 7/00

(54) **3D ultrasound system for extending view of image and method for operating the 3D ultrasound system**

(30) Priority: 14.09.2010 KR 20100090122
(71) Applicant: Samsung Medison Co., Ltd., Gangwon-do 250-875 (KR)
(72) Inventor: Lee, Kwang Hee, Daejeon (KR)
(74) Representative: Schmid, Wolfgang

(57) **Abstract**

A 3D ultrasound system (101) and a method for operating the same. The 3D ultrasound system (101) includes a scanning unit (103) which generates a plurality of volume images with respect to an object by using ultrasound signals; a processor (105) which identifies a first point with respect to a first volume image from among the plurality of volume images and identifies a second point with respect to a second volume image from among the plurality of volume images; and a control unit (109) which overlaps the first and second volume images based on the first and second points.

## Description

### CROSS-REFERENCE TO RELATED PATENT APPLICATION

This application claims the benefit of Korean Patent Application No. 10-2010-0090122, filed on September 14, 2010, in the Korean Intellectual Property Office, the disclosure of which is incorporated herein in its entirety by reference.

### BACKGROUND OF THE INVENTION

### 1. Field of the Invention

The present invention relates to a 3D ultrasound system for extending view of image with respect to an object by generating a plurality of volume images by using ultrasound signals and overlapping the generated volume images and a method for operating the 3D ultrasound system.

### 2. Description of the Related Art

An ultrasound system is a device for transmitting ultrasound signals from the surface of a human body toward a predetermined region inside the human body (that is, an object, such as a fetus or an internal organ) and acquiring images of a tomogram of a soft-tissue or blood flow by using data regarding an ultrasound signal reflected by a tissue inside the human body.

Such an ultrasound system features small size, low cost, real-time display, and no radiation exposure (e.g., X-rays). Therefore, ultrasound systems are widely used with other types of imaging systems, such as an X-ray system, a computerized tomography (CT) scanner, a magnetic resonance image (MRI) system, a nuclear medicine system, etc.

An ultrasound system may generate a plurality of volume images by switching scanning regions of an object according to a particular part of the object to be viewed. Therefore, a technique for an image with an extended view by providing a single image by overlapping a plurality of volume images acquired by scanning different regions of an object is in demand.

### SUMMARY OF THE INVENTION

The present invention provides a method of extending view of an image by generating a plurality of volume images with respect to an object by using ultrasound signals and overlapping the plurality of images by using the energy of a landmark related to the object or a polygon template corresponding to the object.

According to an aspect of the present invention, there is provided a 3D ultrasound system including a scanning unit which generates a plurality of volume images with respect to an object by using ultrasound signals; a processor which identifies a first point with respect to a first volume image from among the plurality of volume images and identifies a second point with respect to a second volume image from among the plurality of volume images; and a control unit which overlaps the first and second volume images based on the first and second points.

According to another aspect of the present invention, there is provided a method of operating a 3D ultrasound system, the method including generating a plurality of volume images with respect to an object by using ultrasound signals; identifying a first point with respect to a first volume image from among the plurality of volume images and a second point with respect to a second volume image from among the plurality of volume images; and overlapping the first and second volume images based on the first and second points.

### BRIEF DESCRIPTION OF THE DRAWINGS

The above and other features and advantages of the present invention will become more apparent by describing in detail exemplary embodiments thereof with reference to the attached drawings in which:
FIG. 1 is a diagram of a 3D ultrasound system 101 according to an embodiment of the present invention;
FIG. 2 is a diagram showing an example of overlapping volume images in a 3D ultrasound system according to an embodiment of the present invention;
FIG. 3 is a diagram showing overlapping volume images in a 3D ultrasound system according to another embodiment of the present invention; and
FIG. 4 is a flowchart showing a method of operating a 3D ultrasound system, according to an embodiment of the present invention.

### DETAILED DESCRIPTION OF THE INVENTION

Hereinafter, the present invention will be described in detail by explaining preferred embodiments of the invention with reference to the attached drawings. Like reference numerals in the drawings denote like elements.

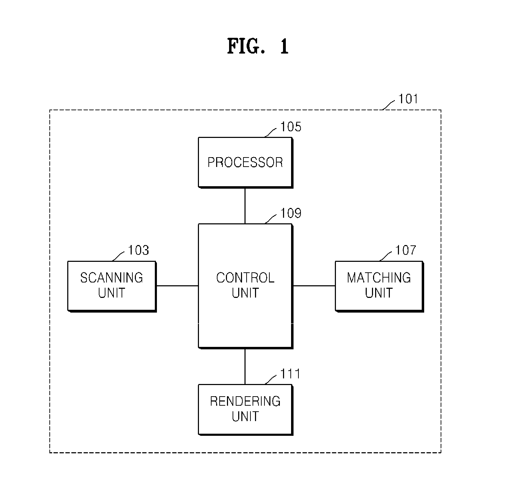

FIG. 1 is a diagram of a 3D ultrasound system 101 according to an embodiment of the present invention.

Referring to FIG. 1, the 3D ultrasound system 101 includes a scanning unit 103, a processor 105, a matching unit 107, a control unit 109, and a rendering unit 111.

The scanning unit 103 generates a plurality of volume images with respect to an object by using ultrasound signals. Here, the scanning unit 103 may generate a plurality of volume images by switching scanning regions of the object to be scanned.

The processor 105 is input a landmark related to the object, identifies a first point corresponding to the landmark in a first volume image from among the plurality of volume images, and identifies a second point corresponding to the landmark in a second volume image from among the plurality of volume images. For example, the processor 105 may be input "thalamus" as the landmark and may set up seeds at first and second points corresponding to the thalamus.

There, since the first and second volume images include a particular same region of an object and different regions of the object, a landmark may be input in relation to the particular region of the object. For example, in a case where an object is the head of a fetus and both the first and second volume images include the head of the fetus, the processor 105 may be input a landmark related to the head of the fetus.

The matching unit 107 determines sagittal views respectively with respect to the first and second volume images and may perform template matching at m points (m is a natural number) in the first and second volume images with the determined sagittal views.

For example, the matching unit 107 may perform template matching in a plurality of top view images with respect to the first volume images with a determined sagittal view by using an elliptical template and may perform template matching in a plurality of top view images with respect to the second volume images with a determined sagittal view by using the elliptical template. Here, in a case if the first and second volume images are images regarding a fetus, the top view images may be images scanned in a head-wise direction of the fetus.

The control unit 109 overlaps the first and second volume images from among the plurality of volume images.

### i) Overlapping Images Using First and Second Points corresponding to Landmark

In other words, the control unit 109 may overlap the first and second volume images based on a first point corresponding to the landmark with respect to the first image and a second point corresponding to the landmark with respect to the second image.

Here, the control unit 109 may rotate the first and second volume images, compare a first coordinate of the first point in the first volume image and a second coordinate of the second point in the second volume image, and overlap the first and second volume images at a rotated position at which the first and second points overlap in a permissible range as a result of the comparison. Here, the narrower the permissible range is (that is, the smaller the distance between the first coordinate and the second coordinate is), the control unit 109 may overlap the first and second volume images with better synchronization with the object.

Furthermore, if n landmarks (n is a natural number equal to or greater than 3) are input, the control unit 109 may rotate the first and second volume images, compare a first symbol which connects the first points in the first volume image and a second symbol which connects the second points in the second volume image, and overlap the first and second volume images at a rotated position at which the first and second symbols overlap in a permissible range as a result of the comparison.

The control unit 109 may better represent the object by overlapping the first and second volume images by using the first symbol in the first volume image and the second symbol in the second volume image that are related to the n landmarks.

### ii) Overlapping Images Using the Energy of Polygon Templates

In a case where the landmark is not input, the control unit 109 may measure energy of a polygon template, which is generated by performing the template matching, with respect to each of the m points in the first and second volume images with the determined sagittal views and overlap the first and second volume images based on a point at which relatively small energy is measured. Here, in a case where a matching rate between image at a point and the polygon template is high, the control unit 109 may measure that energy of the polygon template is high.

The rendering unit 111 may render the overlapping first and second volume images into a single image and display the single image on a display unit (not shown). Here, even in a case where the first and second images with respect to different regions of an object are generated by the scanning unit 103, the rendering unit 111 may render the first and second volume images into a single volume image, and thus, view of the single volume image may be extended.

For example, in a case where an object is a fetus, the first volume image is a volume image with respect to the center of the body and the head, and the second volume image is a volume image with respect to the center of the body and the legs, the rendering unit 111 may provide a volume image with respect to the entire fetus by rendering the first and second volume images that overlap by using the center of the body into a single volume image and displaying the single volume image with respect to the fetus.

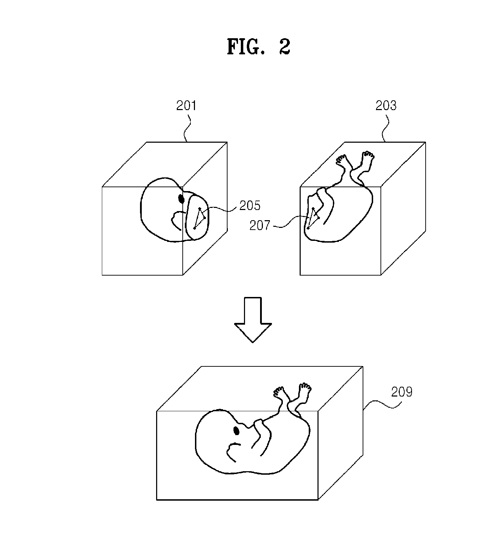

FIG. 2 is a diagram showing an example of overlapping volume images in a 3D ultrasound system according to an embodiment of the present invention.

Referring to FIG. 2, the 3D ultrasound system may generate a plurality of volume images with respect to an object by using ultrasound signals and may be input n landmarks (n is a natural number equal to or greater than 3) regarding the object. The 3D ultrasound system may rotate each of the first and second volume images from among the plurality of generated volume images, compare a first symbol which connects first points corresponding to the landmarks in the first volume image and a second symbol which connects the second points corresponding to the landmarks in the second volume image, overlap the first and second volume images at a rotated position at which the first and second symbols overlap in a permissible range as a result of the comparison, and display the overlapping first and second volume images as a single image.

For example, the 3D ultrasound system may generate a first volume image 201 and a second volume image 203 with respect to a fetus by using ultrasound signals, be input 3 landmarks regarding the center of the fetus, rotate each of the first volume image 201 and the second volume image 203, and overlap the first volume image 201 and the second volume image 203 at a rotated position at which a first symbol 205 which connects first points corresponding to the landmarks in the first volume image 201 and a second symbol 207 which connects second points corresponding to the landmarks in the second volume image 203 overlap, and display the overlapped first and second volume 201 and 203 as a single image 209.

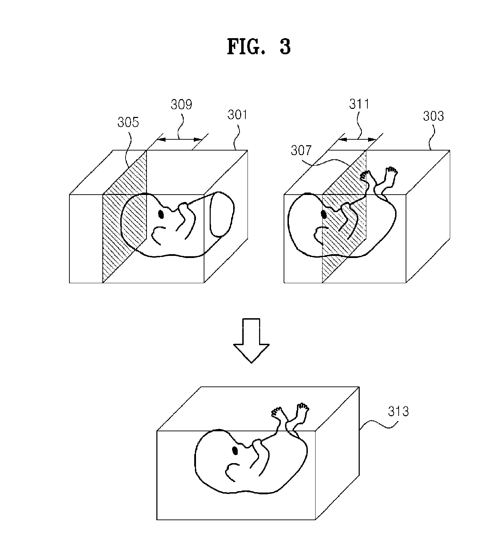

FIG. 3 is a diagram showing overlapping volume images in a 3D ultrasound system according to another embodiment of the present invention.

Referring to FIG. 3, the 3D ultrasound system may generate a plurality of volume images with respect to an object by using ultrasound signals, determine sagittal views respectively with respect to first and second volume images from among the plurality of generated volume images, and perform template matching at m points (m is a natural number) in the first and second volume images with the determined sagittal views.

The 3D ultrasound system may measure energy of a polygon template, which is generated by performing the template matching, with respect to each of the m points in the first and second volume images with the determined sagittal views, overlap the first and second volume images based on a point at which relatively small energy is measured, and display the overlapped first and second volume as a single image.

For example, the 3D ultrasound system may generate a first volume image 301 and a second volume image 303 with respect to a fetus by using ultrasound signals, determine sagittal views respectively with respect to first and second volume images 301 and 303, and perform template matching at 10 points in the first and second volume images 301 and 303 with the determined sagittal views. Here, the 3D ultrasound system may perform template matching by using an elliptical template in a plurality of top view images 305 with respect to the first volume image 301 and may perform template matching by using the elliptical template in a plurality of top view images 307 with respect to the second volume image 303.

Here, the 3D ultrasound system may perform template matching by extracting top view images corresponding to selected portions in the first and second volume images 301 and 303. For example, the 3D ultrasound system may extract 10 top view images 305 and 307 corresponding to the head 309 and 311 of the fetus respectively from the first and second images 301 and 303.

The 3D ultrasound system may overlap the first and second volume images 301 and 303 based on a point at which a top-view image which has small energy of a polygon template from among the 10 top view images 305 with respect to the first volume image 301 and a point at which a top-view image which has small energy of a polygon template from among the 10 top view images 307 with respect to the second volume image 303 and display the overlapping first and second images 301 and 303 as a single image 313.

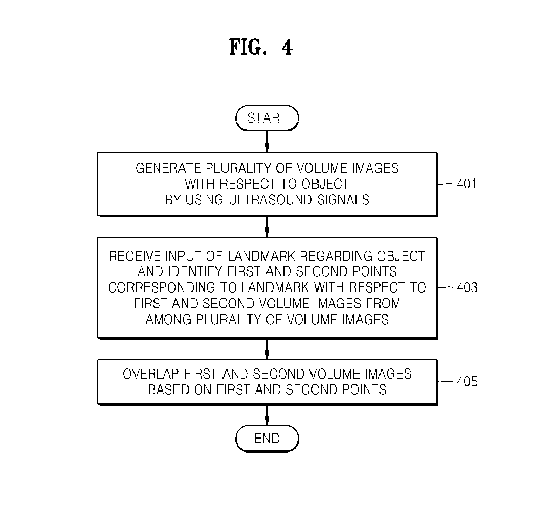

FIG. 4 is a flowchart showing a method of operating a 3D ultrasound system, according to an embodiment of the present invention.

Referring to FIG. 4, in operation 401, the 3D ultrasound system generates a plurality of volume images with respect to an object by using ultrasound signals. Here, the 3D ultrasound system may generate the plurality of volume images by switching scanning regions of the object to be scanned.

In operation 403, the 3D ultrasound system is input a landmark regarding the object, identifies a first point corresponding to the landmark in a first volume image from among the plurality of images, and identifies a second point corresponding to the landmark in a second volume image from among the plurality of images.

Here, since the first and second volume images include a particular same region of an object and different regions of the object, the 3D ultrasound system may be input a landmark in relation to the particular region of the object.

In operation 405, the 3D ultrasound system overlaps the first and second volume images based on the first and second points, renders the overlapping first and second volume images into a single image, and displays the single image.

Here, the 3D ultrasound system may rotate the first and second volume images, compare a first coordinate of the first point in the first volume image and a second coordinate at of the second point in the second volume image, and overlap the first and second volume images at a rotated position at which the first and second points overlap in a permissible range as a result of the comparison.

Furthermore, if n landmarks (n is a natural number equal to or greater than 3) are input, the 3D ultrasound system may rotate the first and second volume images, compare a first symbol which connects the first points existing in the first volume image and a second symbol which connects the second points existing in the second volume image, and overlap the first and second volume images at a rotated position at which the first and second symbols overlap in a permissible range as a result of the comparison.

In a case where the landmark is not input, the 3D ultrasound system may determine sagittal views respectively with respect to the first and second volume images, perform template matching at m points (m is a natural number) in the first and second volume images with the determined sagittal views, and overlap the first and second volume images by using the energy of a polygon template with respect to the m points.

Here, the 3D ultrasound system may overlap the first and second volume images based on a point at which relatively small energy is measured.

According to an embodiment of the present invention, the 3D ultrasound system may extend the view of an image with respect to an object by generating a plurality of volume images with respect to an object by using ultrasound signals and overlapping the plurality of images by using a landmark related to the object or energy of a polygon template matched to the object.

Embodiments of the present invention provide computer readable recording media having recorded thereon program commands for executing operations in various computers. The computer readable recording media may include program commands, data files, data structures, or combinations thereof. Computer commands recorded in the computer readable recording media may either be designed and configured exclusively for the present invention or be already known and usable in the related art. Examples of the computer readable recording media include magnetic media, such as hard disk drives, floppy disk drives, and magnetic tapes, optical media, such as CD-ROMs, DVDs, etc., magneto-optical media, such as floptical disks, and hardware devices that are specially designed to store and execute program commands, such as ROMs, RAMs, flash memories, etc. Examples of the program codes include not only machine codes written by compilers, but also advanced language codes that may be executed on computers by using interpreters or the like.

While this invention has been particularly shown and described with reference to preferred embodiments thereof, it will be understood by those skilled in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A 3D ultrasound system comprising:
a scanning unit which generates a plurality of volume images with respect to an object by using ultrasound signals;
a processor which identifies a first point with respect to a first volume image from among the plurality of volume images and identifies a second point with respect to a second volume image from among the plurality of volume images; and
a control unit which overlaps the first and second volume images based on the first and second points.

2. The 3D ultrasound system of claim 1, wherein the processor is input a landmark regarding the object and identifies the first and second points respectively in the first and second volume images in correspondence to the landmark.

3. The 3D ultrasound system of claim 2, wherein, in a case where n landmarks (n is a natural number equal to or greater than 3) are input, the control unit rotates the first and second volume images, compares a first symbol which connects the first points existing in the first volume image and a second symbol which connects the second points existing in the second volume image, and overlaps the first and second volume images at a rotated position at which the first and second symbols overlap in a permissible range as a result of the comparison.

4. The 3D ultrasound system of claim 1, wherein the control unit rotates the first and second volume images, compares a first coordinate of the first point in the first volume image and a second coordinate of the second point in the second volume image, and overlaps the first and second volume images at a rotated position at which the first and second points overlap in a permissible range as a result of the comparison.

5. The 3D ultrasound system of claim 1, further comprising a rendering unit which renders the overlapping first and second volume images into a single image and displays the single image.

6. The 3D ultrasound system of claim 1, further comprising a matching unit which determines sagittal views respectively with respect to the first and second volume images and may perform template matching at m points (m is a natural number) in the first and second volume images with the determined sagittal views,
wherein energy of a polygon template, which is generated by performing the template matching, is measured with respect to each of the m points in the first and second volume images with the determined sagittal views, and
the first and second volume images overlap based on a point at which relatively small energy is measured.

7. A method of operating a 3D ultrasound system, the method comprising:
generating a plurality of volume images with respect to an object by using ultrasound signals;
identifying a first point with respect to a first volume image from among the plurality of volume images and a second point with respect to a second volume image from among the plurality of volume images; and
overlapping the first and second volume images based on the first and second points.

8. The method of claim 7, further comprising receiving input of a landmark regarding the object,
wherein the first and second points are identified respectively in the first and second volume images in correspondence to the landmark.

9. The method of claim 8, wherein, in a case where n landmarks (n is a natural number equal to or greater than 3) are input, the first and second volume images are rotated, a first symbol which connects the first points in the first volume image and a second symbol which connects the second points in the second volume image are compared, and the first and second volume images overlap at a rotated position at which the first and second symbols overlap in a permissible range as a result of the comparison.

10. The method of claim 7, wherein the first and second volume images are rotated, a first coordinate of the first point in the first volume image and a second coordinate of the second point in the second volume image are compared, and the first and second volume images overlap at a rotated position at which the first and second points overlap in a permissible range as a result of the comparison.

11. The method of claim 7, further rendering the overlapping first and second volume images into a single image and displaying the single image.

12. The method of claim 7, further comprising determining sagittal views respectively with respect to the first and second volume images and performing template matching at m points (m is a natural number) in the first and second volume images with the determined sagittal views,
wherein, in a case where the landmark is not input, energy of a polygon template, which is generated by performing the template matching, is measured with respect to each of the m points in the first and second volume images with the determined sagittal views, and
the first and second volume images overlap based on a point at which relatively small energy is measured.
